# EUROPEAN PATENT APPLICATION

(11) **EP 1 666 659 A1**
(43) Date of publication of application: **07.06.2006**
(21) Application number: 05255005.0
(22) Date of filing: 11.08.2005
(51) Int. Cl.: D06F 58/20

(54) **Clothing dryer**

(30) Priority: 03.12.2004 KR 2004101233
(71) Applicant: Samsung Electronics Co., Ltd., Suwon-si, Gyeonggi-Do (KR)
(72) Inventor: Jung, Woo Sup, Suwon-Si Gyeonggi-Do (KR); Kim, Jin Doo, Paldal-Gu Suwon-Si Gyeonggi-Do (KR)
(74) Representative: Davies, Robert Ean

(57) **Abstract**

A clothing dryer including a first exhaust duct (45) mounted inside the clothing dryer and adapted to exhaust air from the clothing dryer and a second exhaust duct (55) to be inserted on the first exhaust duct. A pressing portion (60) is mounted on the first exhaust duct (45) to press both the first and second exhaust ducts, and a fixing portion (70) is affixed to a rear surface cover (15) of the clothing dryer so as to fixedly maintain the first exhaust duct relative to the rear surface cover. A positioning portion (67) is provided to couple the pressing portion (60) to the first exhaust duct (45) and to prevent additional insertion of the second exhaust duct (55) beyond a predetermined length. Thereby, the first and second exhaust ducts are able to be easily connected to each other while preventing optional adjustment of a connection length therebetween, and the first exhaust duct is stably kept so as not to rotate when it is assembled in the clothing dryer. Further, the first and second exhaust ducts are self-sealed to each other.

## Description

The present invention relates to a clothing dryer and, more particularly, but not exclusively, to a connecting member coupled to exhaust ducts which are provided in a clothing dryer to exhaust air from the interior of the clothing dryer.

In general, clothing dryers are machines to dry automatically wet clothing put in a rotatable tub by forcibly blowing hot air into the rotatable tub. Such clothing dryers are classified into forced air circulation type clothing driers designed to circulate forcibly hot air, heated by a heater, into the rotatable tub via a blowing fan, and forced exhaust type clothing driers designed to exhaust forcibly hot air passed through the rotatable tub to the outside.

Considering the configuration of a conventional forced exhaust type clothing dryer, it includes a body provided at its open front side with a door and in its bottom region with a heater, and a rotatable tub rotatably disposed in the body. The clothing dryer further includes a hot air inlet duct to deliver hot air, heated by the heater, into the rotatable tub, a hot air outlet duct having a first end communicating with the interior of the rotatable tub via a wet clothing intake opening formed at a front side of the rotatable tub, a first exhaust duct located in the clothing dryer, and a second exhaust duct connected to the first exhaust to discharge the hot air from the rotatable tub to the outside. Near a second end of the hot air outlet duct is provided a blowing fan to suck forcibly the hot air from inside the rotatable tub and discharge it to the outside.

A motor is connected to both the blowing fan and the rotatable tub by means of certain connection means and belt, respectively, for rotating the blowing fan and the rotatable tub.

The first exhaust duct is connected to the second end of the hot air outlet duct, so as to discharge the hot air, delivered from the rotatable tub into the first exhaust duct by operation of the blowing fan, to the outside of the body. The first exhaust duct protrudes to the outside of the clothing dryer by only a short length of approximately 5 cm. Such a restrictive protrusion of the first exhaust duct requires the provision of an additional duct, i.e. the second exhaust duct having a first end connected to the first exhaust duct and a second end exposed to the outside of a room, thereby serving to discharge the hot air to the outside of the room. In order to achieve firm reliable connection therebetween, the first exhaust duct, located in the clothing dryer, must be connected to the second exhaust duct at two or more connecting locations. For this, conventionally, two-spot welding is used, or rivets or screws are fastened through aligned fastening holes of the first and second exhaust ducts. However, such connection of the two ducts using two-spot welding, riveting or screwing is troublesome.

Further, in order to completely prevent leakage of the hot air at the connecting locations of the two exhaust ducts, there exists the need for separate sealing members, such as plaster or aluminum bandage.

Furthermore, in the second exhaust duct required to discharge the hot air from the clothing dryer to the outside of a room, it is connected to the first exhaust duct by a connection length that is optionally varied at the will of installers. Such a variable connection length, however, causes problems as follows.

That is, if the second exhaust duct is deeply inserted into the clothing dryer and is connected to the first exhaust duct by an excessively long length, the sealing members wrap only the second exhaust duct, thereby being incapable of effectively sealing the connecting locations. Conversely, if the second exhaust duct is connected to the first exhaust duct by only a short length, it results in insufficient connection between the first and second exhaust ducts, causing leakage of the hot air.

Moreover, since the first exhaust duct is supported by only a duct insertion opening defined at a rear side of the clothing dryer without a separate structure to fix firmly the first exhaust duct to the body of the clothing dryer, the first exhaust duct suffers from shaking when it is assembled to the clothing dryer. Such an insufficiently supported first exhaust duct tends to rotate when it is connected to the second exhaust duct, causing serious difficulty in the connection of the two ducts.

Therefore, embodiments of the present invention aim to address the above or other problems, and it is an aim of embodiments of the invention to provide a connecting member capable of easily connecting a first exhaust duct, located in the clothing dryer, to an exterior second exhaust duct, without welding, riveting or screwing.

It is a further aim of embodiments of the invention to provide a clothing dryer capable of achieving self-sealing between first and second exhaust ducts without a separate sealing member, such as a plaster bandage.

It is another aim of embodiments of the invention to provide a clothing dryer capable of preventing optional manual adjustment of a predetermined connecting length of first and second exhaust ducts.

It is yet another aim of embodiments of the invention to provide a clothing dryer capable of simplifying not only assembly of a first exhaust duct to the clothing dryer, but also connection of first and second exhaust ducts.

In accordance with one aspect, the present invention provides a clothing dryer comprising: a first exhaust duct mounted inside the clothing dryer to exhaust air from the interior of the clothing dryer; a second exhaust duct inserted on the first exhaust duct to discharge the air to the outside of a room; and a connecting member mounted on the first exhaust duct to connect the first exhaust duct with the second exhaust duct, the connecting member comprising a pressing portion to press an overlapped portion of the first and second exhaust ducts.

The pressing portion may have a projection formed at a first end thereof to be inserted into a hole in the first exhaust duct, and a screw may be provided at a position spaced apart from the projection by a predetermined distance and is operative to fasten the pressing portion to the first exhaust duct, so as to prevent rotation of the pressing portion.

The screw may function as a stopper to prevent additional insertion of the second exhaust duct beyond a predetermined length.

The pressing portion may have the same curved shape as an outer circumference of the first exhaust duct, so as to come into close contact with the first exhaust duct.

The connecting member may further comprise a fixing portion extending upward from a second end of the pressing portion and serving to fix the first exhaust duct relative to a rear surface cover of the clothing dryer.

The second end of the pressing portion may be formed with a rounded bent portion that smoothly connects to the fixing portion.

In accordance with another aspect, the present invention provides a clothing dryer comprising: a first exhaust duct mounted inside the clothing dryer and adapted to exhaust air from the interior of the clothing dryer; a second exhaust duct inserted on the first exhaust duct; a connecting member mounted on the first exhaust duct to connect the first exhaust duct with the second exhaust duct; and a positioning portion to couple the connecting member to the first exhaust duct and to prevent additional insertion of the second exhaust duct beyond a predetermined length.

The positioning portion may have a projection formed at a first end of the connecting member to be inserted into the first exhaust duct, and a screw to fasten the connecting member to the first exhaust duct.

The dryer connecting member may have a pressing portion to press the first and second exhaust ducts, and a fixing portion to fix the first exhaust duct relative to a rear surface cover of the clothing dryer.

The fixing portion may have a rotation-preventing extension to prevent rotation of the first exhaust duct, and the rotation-preventing extension may be inserted into an insertion hole formed at the rear surface cover of the clothing dryer.

The fixing portion and the rear surface cover may have coupling holes, respectively, so that the fixing portion and the rear surface cover are coupled to each other by a screw that is fastened through the coupling holes.

Additional aspects and/or advantages of the invention will be set forth in part in the description which follows and, in part, will be apparent from the description, or may be learned by practice of the invention.

For a better understanding of the invention, and to show how embodiments of the same may be carried into effect, reference will now be made, by way of example, to the accompanying diagrammatic drawings in which:
FIG. 1 is a longitudinal sectional view showing the general configuration of a clothing dryer consistent with an exemplary embodiment of the present invention;
FIG. 2 is a perspective view showing a connecting member mounted on a first exhaust duct provided in the clothing dryer consistent with the exemplary embodiment of the present invention; and
FIG. 3 is a sectional view showing the connecting structure of the first and second exhaust ducts provided in the clothing dryer consistent with the exemplary embodiment of the present invention.

Reference will now be made in detail to an exemplary embodiment of the present invention illustrated in the accompanying drawings, wherein like reference numerals refer to like elements throughout. The exemplary embodiment is described below to explain the present invention by referring to the figures.

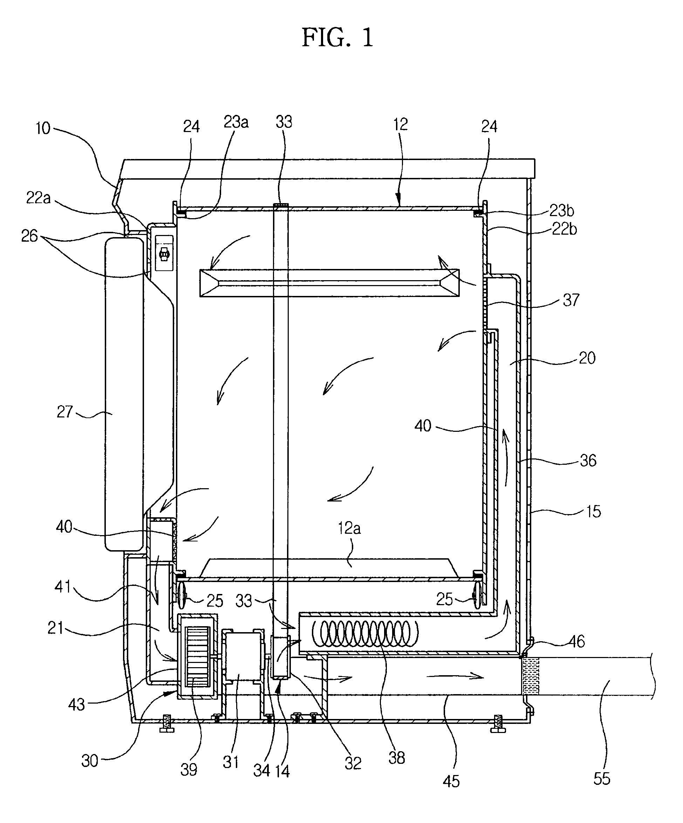

FIG. 1 is a longitudinal sectional view showing the general configuration of a clothing dryer consistent with an exemplary embodiment of the present invention.

Referring to FIG. 1, the clothing dryer of the present invention includes an outer case 10 having a quadrangular box shape, a rotatable tub 12 rotatably disposed in the outer case 10, and a drive unit 14 to rotate the rotatable tub 12. The clothing dryer further includes an air supply channel 20, an exhaust channel 21 and a blowing unit 30, which cooperate with one another in order to circulate outside air into and from the rotatable tub 12.

The rotatable tub 20 has a cylindrical shape defining openings at front and rear sides thereof, and contains a plurality of lifters 12a therein to raise and drop objects to be dried. A front support plate 22a and a rear support plate 22b are mounted in the outer case 10 so that they are fixedly maintained inside front and rear surfaces of the outer case 10. The front and rear support plates 22a and 22b are used to cover the front and rear openings of the rotatable tub 20 and rotatably support the rotatable tub 20. For this, the respective front and rear support plates 22a and 22b have front and rear supporting protrusions 23a and 23b protruding therefrom into the front and rear openings of the rotatable tub 12, thereby rotatably supporting the rotatable tub 12 at the front and rear openings, respectively. Between outer circumferences of the front and rear supporting protrusions 23a and 23b and an inner circumference of the rotatable tub 12 close to the front and rear openings of the rotatable tub 12 are interposed friction-relieving members 24, respectively, so as to minimize frictional resistance generated upon rotation of the rotatable tub 12. Such friction-relieving members 24 may be made of, for example, non-woven fabric, etc. Along lower ends of the respective front and rear support plates 22a and 22b are arranged rollers 25 to support the bottom of the rotatable tub 12. The above-enumerated elements are effective to permit smooth rotation of the rotatable tub 12.

The outer case 10 is formed at a front side thereof with dual openings 26 to put wet clothing into or take clothing out of the outer case 10, and a door 27 is hinged at a lateral side of the dual openings 26 to simultaneously open or close the openings 26.

The drive unit 14, to rotate the rotatable tub 12, includes a drive motor 31 mounted in a lower region of the outer case 10, and a pulley 32 and a rotating belt 33 to transmit power of the drive motor 31 to the rotatable tub 12. The rotating belt 33 is wound on the pulley 32, coupled to a shaft 34 of the drive motor 31, and on an outer circumference of the rotatable tub 12. Such a configuration permits the rotatable tub 12 to rotate with a reduced speed as the drive motor 31 rotates.

The air supply channel 20, to introduce the outside air into the rotatable tub 12, includes a hot air guiding duct 36 mounted in the outer case 10 to extend along the bottom and rear sides of the rotatable tub 12, and an air inlet 37 formed in the rear support plate 22b at a position close to an upper end of the rear support plate 22b. A heater 38 is incorporated in the hot air guiding duct 36 to heat the suctioned outside air.

The exhaust channel 21, to discharge the air from the rotatable tub 12, includes an air outlet 40 formed in the front support plate 22a at a position close to a lower end of the front support plate 22a, a hot air discharge duct 41 having a first end connected to a lower end of the rotatable tub 12 and a second end connected to an entrance of the blowing unit 30, and a first exhaust duct 45 mounted in the lower region of the outer case 10 to communicate an exit of the blowing unit 30 with the outside of the rear surface of the outer case 10.

The blowing unit 30 includes a blowing fan 39 coupled to the shaft 34 of the drive motor 31 that drives the rotatable tub 12, and a blowing case 43 configured to enclose the blowing fan 39 and connected to both the hot air discharge duct 41 and the first exhaust duct 45.

The first exhaust duct 45, which has a first end connected to the blowing unit 30 and a second end affixed to the rear surface 15 of the outer case 10, protrudes to the outside of the clothing dryer by only a short length of approximately 5 cm. In order to facilitate discharge of the hot air to the outside of a room, therefore, a second exhaust duct 55 is connected to the first exhaust duct 45 so that a first end thereof is connected to the first exhaust duct 45 and a second end thereof is exposed to the outside of the room.

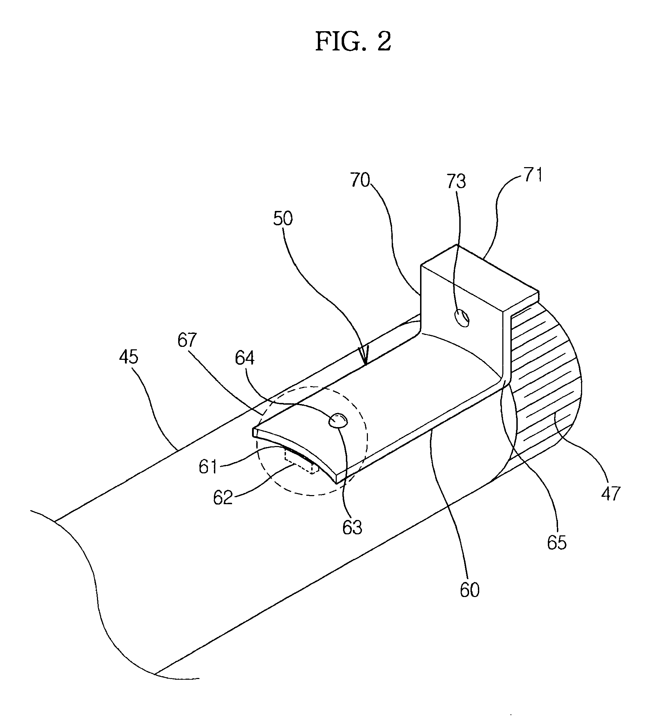

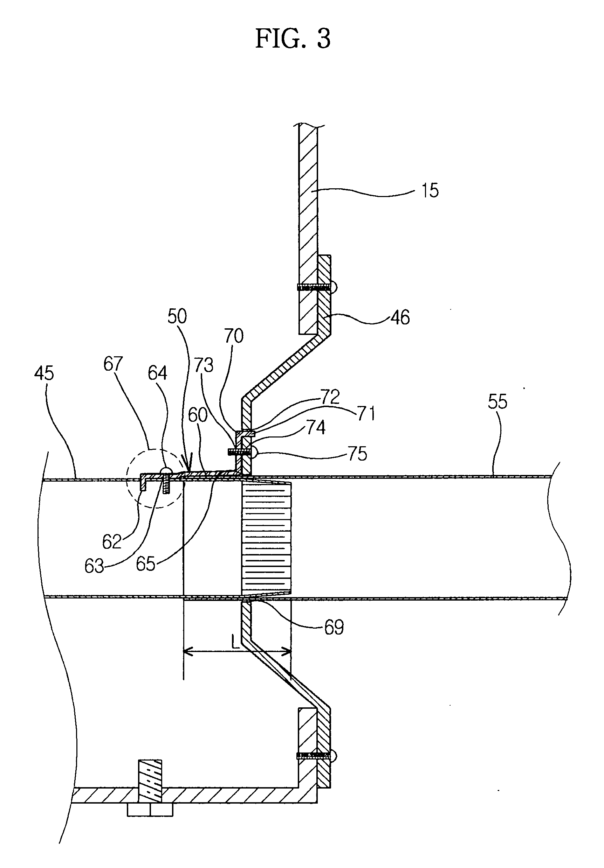

FIG. 2 is a perspective view showing a connecting member mounted on the first exhaust duct 45 provided in the clothing dryer, and FIG. 3 is a sectional view showing the connecting structure of the first exhaust duct 45 and the second exhaust duct 55 provided in the clothing dryer.

As shown in FIG. 2, the first exhaust duct 45 has an approximately cylindrical shape and a knurled portion 47 is formed at an outer circumference of the second end of the first exhaust duct 45. The formation of such a knurled portion 27 is effective to increase the structural strength of the duct end, which is liable to bend even due to minor shock. The knurled portion 27 is tapered so that a diameter thereof is reduced toward its distal end. Thereby, an outer diameter of the first exhaust duct 45 is approximately 102 mm, but an outer diameter of the distal end of the knurled portion 27 is approximately 100 mm.

The reason why the diameter of the knurled portion 27 is reduced toward the distal end thereof is to facilitate insertion of the second exhaust duct 55 having an inner diameter of approximately 103 mm.

In embodiments of the present invention, a connecting member 50 is used to press both the first and second exhaust ducts 45 and 55 and to restrictively permit insertion of the second exhaust duct 55 onto the first exhaust duct 45 by only a predetermined connection length. The connecting member 50 is further used to affix the first exhaust duct 45 to a rear surface cover 46 of the clothing dryer.

The connecting member 50 is divided into a pressing portion 60 mounted on the first exhaust duct 45 to press the second exhaust duct 55, and an L-shaped fixing portion 70 extending upward from a first end of the pressing portion 60 to affix the first exhaust duct 45 to the rear surface cover 46. A first end of the pressing portion 60 is provided with a projection 62 extending downward to be inserted into a hole 61 perforated at the first exhaust duct 45 and with a fastening hole 63 spaced apart from the projection 62 by a predetermined distance and used to couple the pressing portion 60 to the first exhaust duct 45. The connecting member 50 is coupled to the first exhaust duct 45 as a screw 64 is fastened through the fastening hole 63 of the pressing portion 60 and a corresponding hole of the first exhaust duct 45. Here, the screw 64, used to fasten the pressing portion 60 to the first exhaust duct 45, and the projection 62, inserted into the first exhaust duct 45, act as fixing posts for preventing rotation of the connecting member 50 and also constitute a positioning portion 67 to prevent the second exhaust duct 55 from being excessively inserted onto the first exhaust duct 45 beyond the predetermined connection length.

The pressing portion 60 has the same curved shape as a corresponding portion of the outer circumference of the first exhaust duct 45, so that it comes into close contact with the outer circumference of the first exhaust duct 45 after the screw 64 is fastened through the fastening hole 63.

The fixing portion 70, extending upward from a second end of the pressing portion 60, has a rotation-preventing extension 71 configured to be inserted through the rear surface cover 46 and adapted to fixedly maintain the first exhaust duct 45 relative to the rear surface cover 46 while preventing rotation of the first exhaust duct 45, and a coupling hole 73 used to couple the fixing portion 70 to the rear surface cover 46.

The pressing portion 60 and the fixing portion 70 of the connecting member 50 are smoothly connected to each other via a bent portion 65. The bent portion 65 is rounded to facilitate insertion of the second exhaust duct 55.

Referring to FIG. 3, when the first exhaust duct 45 is assembled in the clothing dryer, the first end of the first exhaust duct 45 is first inserted into the blowing case 43 by interference fit, and then the second end of the first exhaust duct 45 is inserted into a duct insertion opening 69 formed at the rear surface cover 46. In succession, as the rotation-preventing extension 71 formed at the fixing portion 70 of the connecting member 50 is inserted into an insertion hole 72 formed at the rear surface cover 46, the coupling hole 73 of the fixing portion 70 is aligned with a coupling hole 74 formed at the rear surface cover 46 and a screw 75 is fastened through both the coupling holes 73 and 74. After that, the rear surface cover 46 is screwed to the rear surface 15 of the outer case 10 of the clothing dryer. In this way, the first exhaust duct 45 is fixed relative to the rear surface 15 of the outer case 10 of the clothing dryer.

Here, the rotation-preventing extension 71 serves not only to prevent rotation of the first exhaust duct 45, but also to facilitate the fastening of the screw 75 through the fixing portion 70 and the rear surface cover 46.

After the first exhaust duct 45 is fixed relative to the rear surface 15 of the outer case 10 as stated above, the second exhaust duct 55 is interference fitted into a gap defined between the first exhaust duct 45 and the pressing portion 60. In this case, preferably, but not necessarily, the outer diameter of the first exhaust duct 45 is 102 mm, and the inner diameter of the second exhaust duct 55 is 103 mm. Such a configuration permits the second exhaust duct 55 to be coupled to the first exhaust duct 45 as an inner circumference of the second exhaust duct 55 comes into contact with the outer circumference of the first exhaust duct 45.

As stated above, the bent portion 65 of the connecting member 50 is rounded. Thus, when the second exhaust duct 55 is inserted via the duct insertion opening 69, an end of the second exhaust duct 55 is able to be easily inserted onto the first exhaust duct 45 by smoothly passing over the rounded bent portion 65. In a state wherein the fixing portion 70 of the connecting member 50 is affixed to the rear surface cover 46, the bent portion 65 of the connecting member 50 is slightly spaced apart from the first exhaust duct 45, and thus the second exhaust duct 55 is inserted into the gap defined between the first exhaust duct 45 and the connecting member 50. Such a gap, however, is narrowed and disappears toward the positioning portion 67 where the pressing portion 60 comes into tight contact with the first exhaust duct 45 by fastening of the screw 64. Thereby, the second exhaust duct 55 is interference-fitted between the pressing portion 60 and the first exhaust duct 45 and generates a frictional force sufficient to restrain an overlapped region between the first and second exhaust ducts 45 and 55. In this way, the second exhaust duct 55 is firmly coupled to the first exhaust duct 45 without using separate fastening methods, such as welding or riveting.

Even if any larger force, overcoming the frictional force between the first exhaust duct 45 and the pressing portion 60, is applied to the second exhaust duct 55 in order to deeply insert the second exhaust duct 55 onto the first exhaust duct 45, additional insertion of the second exhaust duct 55 is impossible since it will be caught by the screw 64.

For this reason, when the second exhaust duct 55 is interference fitted on the first exhaust duct 45 after installation of the connecting member 50, the second exhaust duct 55 is inserted only until it reaches the front side of the screw 64 or comes into contact with the screw 64. Thus, the first and second exhaust ducts 45 and 55 are overlapped by a substantially constant connection length L. This prevents optional manual adjustment of the connection length L upon installation of the clothing dryer.

In embodiments of the present invention, further, the second exhaust duct 55 is interposed between the first exhaust duct 45 and the pressing portion 60 so that the first exhaust duct 45 comes into close contact with the second exhaust duct 55. This eliminates the need for a separate sealing member.

As apparent from the above description, embodiments of the present invention provide a clothing dryer in which a first exhaust duct, installed inside the clothing dryer to exhaust air from the clothing dryer, can be simply connected to a second exhaust duct used to discharge the air to the outside of a room, without using welding, riveting or screwing.

Further, after connection completion, the first and second exhaust ducts are self-sealed to each other without using a separate sealing member, such as a plaster bandage.

Furthermore, according to embodiments of the present invention, the first and second exhaust ducts are connected, i.e. overlapped, by a predetermined connection length, preventing optional manual adjustment of the connection length.

Finally, upon assembly of the first exhaust duct to the clothing dryer, rotation of the first exhaust duct can be completely prevented, enabling convenient and easy assembly thereof.

Although an exemplary embodiment of the present invention has been shown and described, it will be appreciated by those skilled in the art that changes may be made in this embodiment without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A clothing dryer comprising:
a first exhaust duct (45) mounted inside the clothing dryer to exhaust air from an interior of the clothing dryer;
a second exhaust duct (55) inserted on the first exhaust duct (45) to discharge the air to the outside of a room; and
a connecting member (50) mounted on the first exhaust duct (45) to connect the first exhaust duct (45) with the second exhaust duct (55), the connecting member (50) comprising a pressing portion (60) operable to press an overlapped portion of the first (45) and second (55) exhaust ducts.

2. The dryer according to claim 1, wherein the pressing portion (60) has a projection (62) formed at a first end thereof to be inserted into a hole (61) in the first exhaust duct (45), and
wherein a screw (64) is provided at a position spaced apart from the projection (62) by a predetermined distance and is operative to fasten the pressing portion (60) to the first exhaust duct (45), so as to prevent rotation of the pressing portion (60).

3. The dryer according to claim 2, wherein the screw (64) functions as a stopper to prevent additional insertion of the second exhaust duct (55) beyond a predetermined length.

4. The dryer according to any preceding claim, wherein the pressing portion (60) has the same curved shape as an outer circumference of the first exhaust duct (45), so as to come into close contact with the first exhaust duct (45).

5. The dryer according to any preceding claim, wherein the connecting member (50) further comprises a fixing portion (70) extending upward from a second end of the pressing portion and serving to fix the first exhaust duct (45) relative to a rear surface (15) cover of the clothing dryer.

6. The dryer according to claim 5, wherein the second end of the pressing portion (60) is formed with a rounded bent portion that smoothly connects to the fixing portion (70).

7. A clothing dryer comprising:
a first exhaust duct (45) mounted inside the clothing dryer to exhaust air from an interior of the clothing dryer;
a second exhaust (55) duct inserted in the first exhaust duct (45);
a connecting member (50) mounted on the first exhaust duct (45) to connect the first exhaust duct with the second exhaust duct (55); and
a positioning portion (67) to couple the connecting member (50) to the first exhaust duct (45) and to prevent additional insertion of the second exhaust duct (55) beyond a predetermined length.

8. The dryer according to claim 7, wherein the positioning portion (67) has:
a projection (G2) formed at a first end of the connecting member to be inserted into a hole (61) in the first exhaust duct (45); and
a screw (64) to fasten the connecting member (50) to the first exhaust duct (45).

9. The dryer according to claim 7 or 8, wherein the connecting member (50) has:
a pressing portion (60) operable to press the first (45) and second (55) exhaust ducts; and
a fixing portion (70) operable to fix the first exhaust duct (45) relative to a rear surface (15) cover of the clothing dryer.

10. The dryer according to claim 9, wherein the fixing portion (70) has a rotation-preventing extension (71) to prevent rotation of the first exhaust duct (45), and
wherein the rotation-preventing extension (71) is inserted into an insertion hole (72) formed at the rear surface (15) cover of the clothing dryer.

11. The dryer according to claim 10, wherein both the fixing portion (70) and the rear surface (15) cover have coupling holes (73, 74), respectively, so that the fixing portion and the rear surface cover are coupled to each other by a screw (75) that is fastened through the coupling holes.
